# FASCICULE DE BREVET EUROPEEN

(11) **EP 2 227 309 B1**
(45) Date de publication et mention de la délivrance du brevet: **07.11.2012**
(21) Numéro de dépôt: 08857622.8
(22) Date de dépôt: 21.11.2008
(51) Int. Cl.: B01D 53/26

(54) **PROCEDE DE SECHAGE D'UN DEBIT DE GAZ RICHE EN DIOXYDE DE CARBONE**
VERFAHREN ZUM TROCKNEN EINES KOHLENDIOXIDREICHEN GASSTROMES
METHOD FOR DRYING A GAS FLOW RICH IN CARBON DIOXIDE

(30) Priorité: 30.11.2007 FR 0759441
(43) Date de publication de la demande: 15.09.2010
(73) Titulaire: L'Air Liquide Société Anonyme pour l'Etude et l'Exploitation des Procédés Georges Claude, 75007 Paris (FR)
(72) Inventeur: ANTONIO, Dominique, F-77550 Moissy Cramayel (FR); DARDE, Arthur, F-75005 Paris (FR); MICHEL, Christophe, F-78800 Houilles (FR); RAUCH, Jean-François, F-94340 Joinville Le Pont (FR); TRANIER, Jean-Pierre, F-94240 L'hay Les Roses (FR)
(74) Mandataire: Mercey, Fiona Susan
(86) Numéro de dépôt international: PCT/FR2008/052103
(87) Numéro de publication internationale: WO 2009/071816

(56) Documents cités:
- DE-A1- 19 600 377
- FR-A- 2 530 965
- GB-A- 2 203 965
- US-A- 4 405 343
- US-A1- 2007 028 772

## Description

La présente invention est relative à un procédé de compression et de séchage d'un débit de gaz riche en dioxyde de carbone, par exemple contenant plus que 50% mol. de dioxyde de carbone.

US-A-20070028772 décrit un procédé selon le préambule de la revendication 1. DE-A-102006022293 décrit un appareil de compression et de séchage comprenant des moyens pour envoyer du gaz comprimé pris en amont d'un refroidisseur à des bouteilles d'adsorption utilisées pour le séchage.

Les fumées de combustion sont chargées en dioxyde de carbone et autres gaz acides (NOₓ, SOₓ) et bien sûr humides. Lorsqu'il s'agit d'une oxy-combustion, la concentration en CO₂ atteint aisément 80% en volume.

Cela pose un problème lors de la première pressurisation des bouteilles d'adsorption prévues pour sécher les fumées : ces fumées sous pression (typiquement 30 bars) vont être détendues dans les bouteilles qui sont à la pression atmosphérique. La détente du CO₂ va conduire à un refroidissement important, nettement en dessous de 0°C. Le phénomène pourrait conduire à créer des cristaux de glace d'eau qui endommageraient les équipements et les adsorbants.

L'invention consiste à pressuriser les bouteilles avec du gaz chaud, par exemple le CO₂, pour éviter le problème mentionné ci-dessus.

Selon un objet de l'invention, il est prévu un procédé selon la revendication 1.

Eventuellement, la partie du gaz riche en dioxyde de carbone comprimé dans le compresseur prise en amont du refroidisseur se détend dans la bouteille jusqu'à une température au-dessus de 0°C.

Dans ce cadre, une possibilité est de ne pas refroidir suffisamment les fumées en utilisant un circuit de contournement d'eau de refroidissement autour du réfrigérant final par exemple. Ce genre de solution présente le risque de ne pas être assez fiable car les débits d'eau de refroidissement ne sont en général pas bien contrôlés.

La solution proposée consiste à tirer une petite ligne de CO₂ à la sortie du compresseur, piquée avant le réfrigérant final, qui permet de mettre en pression les bouteilles de dessiccation.

Il faut remarquer qu'une fois les bouteilles pressurisées, le problème ne se posera plus pour les cycles suivants. En effet, il est alors possible de repressuriser les bouteilles avec du CO₂ sec à la pression d'adsorption.

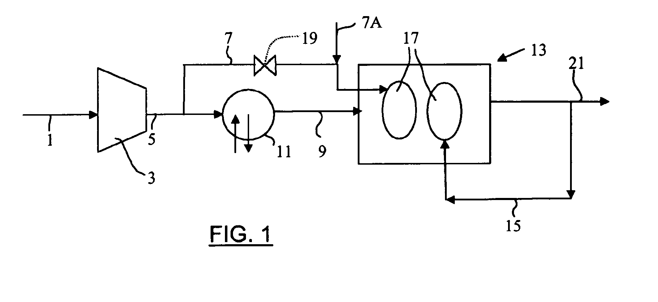

L'invention sera décrite en plus de détail en se référant à la figure qui représente un procédé selon l'invention.

Un gaz riche en dioxyde de carbone contient de l'eau et d'autres impuretés, telles que l'oxygène, l'azote, l'argon, des gaz acides (NOₓ, SOₓ).... Afin de pouvoir épurer le gaz par une étape ultérieure de distillation, il est nécessaire d'abord de le sécher.

Le gaz 1 est comprimé à partir d'1 bar dans un compresseur 3 en acier inoxydable pour produire un gaz comprimé 5 à entre 3 et 45 bars, par exemple à environ 30 bars. Le compresseur 3 est relié à l'appareil de dessiccation 13 par une conduite 9 à travers un appareil de refroidissement 11 et par une conduite 7 sans appareil de refroidissement.

L'appareil de dessiccation 13 fonctionne de manière connue avec un cycle dans lequel une des bouteilles 17 sert à épurer le gaz alors que l'autre est régénérée par un gaz de régénération, dans ce cas une partie 15 du gaz sec 21.

En fonctionnement normal, tout le gaz 5 est envoyé à la conduite 9, refroidi par l'appareil de refroidissement 11 et séché dans l'appareil de dessiccation 13 pour produire un gaz sec 21 à 30 bars, dont une partie 15 est recyclé à une des bouteilles pour la pressuriser.

Lors de la première pressurisation des bouteilles qui a lieu au moment du démarrage, le gaz sec 15 n'est pas disponible. Ainsi selon l'invention, au moins une partie du gaz 5 est déviée vers la conduite 7 à travers la vanne ouverte 19 pour parvenir à une bouteille 17 de l'appareil de dessiccation à la température de sortie du dernier étage du compresseur 3 et à une pression similaire à la pression de sortie du compresseur 3. Le débit 7 se trouve à une température plus élevée que la température d'entrée du gaz 9 dans l'unité d'adsorption, Ainsi ce débit 7 peut pressuriser la bouteille 17 à la pression requise uniquement pour la mise en marche de l'appareil, sans risque de formation de glace d'eau en se détendant d'entre 3 et 45 bars abs à environ la pression atmosphérique dans la bouteille non-pressurisée 17.

## Revendications

1. Procédé de compression et de séchage d'un gaz riche en dioxyde de carbone dans lequel on comprime le gaz pour produire un gaz riche en dioxyde de carbone à haute pression (5) riche en dioxyde de carbone dans un compresseur (3) et ensuite on refroidit le gaz à haute pression dans un refroidisseur (11) pour former un gaz refroidi (9), on épure le gaz riche en dioxyde de carbone (9) dans une unité de séchage par adsorption (13) comprenant au moins deux bouteilles d'adsorbant (17) opérant selon un cycle dans lequel une bouteille est alimentée par le gaz riche en dioxyde de carbone à sécher pendant qu'une autre bouteille est mise en pression et régénérée par un débit de gaz sec (15) produit par l'unité de séchage, l'unité de séchage, produisant au moins un gaz sec (21) riche en dioxyde de carbone **caractérisé en ce que** uniquement lors de la première pressurisation d'au moins une bouteille, au moment du démarrage, une partie (7) du gaz riche en dioxyde de carbone (5) comprimé dans le compresseur, prise en amont du refroidisseur et plus chaude que le gaz refroidi (9) à l'entrée de l'unité de séchage est envoyée à la bouteille, pour la pressuriser.

2. Procédé selon la revendication 1 dans lequel la partie (7) du gaz riche en dioxyde de carbone envoyé à la bouteille lors de la première pressurisation se détend dans celle-ci jusqu'à une température au-dessus de 0°C.

## Claims

1. Method for compressing and drying a gas rich in carbon dioxide, the gas rich in carbon dioxide being compressed to produce a high-pressure gas rich in carbon dioxide (5) in a compressor (3), and the high pressure gas then being cooled in a cooler (11) to form a cooled gas (9), the gas rich in carbon dioxide (9) being purified in a unit for drying by adsorption (13) comprising at least two bottles of adsorbent (17) operating in a cycle in which one bottle is supplied with the gas rich in carbon dioxide for drying whilst another bottle is pressurised and regenerated by a flow of dry gas (15) produced by the drying unit, the drying unit producing at least one dry gas (21) rich in carbon dioxide, **characterised in that** only during the first pressurisation of at least one bottle, at start-up, a part (7) of the gas rich in carbon dioxide (5) compressed in the compressor, taken upstream of the cooler, and hotter than the cooled gas (9) at the inlet of the drying unit, is conveyed to the bottle to pressurise it.

2. Method according to claim 1, wherein the part (7) of the gas rich in carbon dioxide conveyed to the bottle during the first pressurisation expands therein to a temperature higher than 0 °C.

## Patentansprüche

1. Verfahren zur Verdichtung und Trocknung eines kohlendioxidreichen Gases, wobei das kohlendioxidreiche Gas zur Erzeugung eines kohlendioxidreichen Hochdruckgases (5) in einem Verdichter (3) verdichtet wird und anschließend das Hochdruckgas in einem Kühler (11) gekühlt wird, um ein gekühltes Gas (9) zu bilden, das kohlendioxidreiche Gas (9) in einer Adsorptionstrocknereinheit (13) gereinigt wird, die mindestens zwei Adsorberkartuschen (17) umfasst und entsprechend einem Zyklus arbeitet, in dem eine Kartusche mit dem zu trocknenden kohlendioxidreichen Gas gespeist wird, während eine andere Kartusche mit Druck beaufschlagt und durch einen Trockengasstrom (15), der von der Trocknereinheit erzeugt wird, regeneriert wird, wobei die Trocknereinheit mindestens ein kohlendioxidreiches Trockengas (21) erzeugt, **dadurch gekennzeichnet, dass** einzig bei der ersten Druckbeaufschlag mindestens einer Kartusche, zum Zeitpunkt des Anlaufens, ein Teil (7) des in dem Verdichter verdichteten kohlendioxidreichen Gases (5), der stromaufwärts des Kühlers entnommen wurde und wärmer als das abgekühlte Gas (9) am Eingang der Trocknereinheit ist, an die Kartusche geleitet wird, um sie mit Druck zu beaufschlagen.

2. Verfahren nach Anspruch 1, wobei der Teil (7) des kohlendioxidreichen Gases, das bei der ersten Druckbeaufschlagung an die Kartusche geleitet wurde, sich in dieser Letzten bis auf eine Temperatur über 0 °C entspannt.
